(19) Europäisches Patentamt

European Patent Office

Office européen des brevets

(11) **EP 4 570 372 A1**

(12) **EUROPEAN PATENT APPLICATION**

(43) Date of publication:
**18.06.2025 Bulletin 2025/25**

(21) Application number: **23217191.8**

(22) Date of filing: **15.12.2023**

(51) International Patent Classification (IPC):
***B01J 20/20*** (2006.01)

(52) Cooperative Patent Classification (CPC):
**B01J 20/20; B01J 20/045; B01J 20/28016;
B01J 20/28076; B01J 20/3204; B01J 20/3234;
B01J 20/3483**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sabic Agri-Nutrients Company
31961 Jubail (SA)**

(72) Inventors:
- **MAMEDOV, Aghaddin
  Sugar Land, 77478 (US)**
- **AL-RABHI, Mohamed
  Sugar Land, 77478 (US)**

(74) Representative: **J A Kemp LLP
80 Turnmill Street
London EC1M 5QU (GB)**

(54) **AMMONIUM SULFATE IMPREGNATED CARBON BLACK AS CO2 ADSORBENT**

(57) Disclosed is a composition containing an acid modified and activated carbon black embedded with ammonium sulfate $((NH4)_2SO_4)$. Methods of making and using the same composition as $CO_2$ adsorbent as well as a fertilizer are disclosed.

**FIGURE**

**Description**

**BACKGROUND OF THE INVENTION**

**I. Field of the Disclosure**

This disclosure generally concerns compositions containing an adsorbent material. In particular embodiments, the disclosure concerns compositions for $CO_2$ adsorption and fertilizer applications containing an activated carbon black and ammonium sulfate.

**II. Background**

It is well known that carbon dioxide ($CO_2$) emissions are at least partially responsible for global warming. One strategy for decreasing $CO_2$ emissions into the atmosphere is to use $CO_2$ containing emissions as feedstock for other processes, thus utilizing the $CO_2$ instead of releasing it into the atmosphere. For this reason, many researchers have tried to activate or capture the $CO_2$ molecule through the use of various materials. However, due to the high stability of this molecule, $CO_2$ activation is extremely challenging, which oftentimes results in inefficient catalytic activity.

Absorption, adsorption, membrane separation, and cryogenic distillation are examples of the available methods for capturing $CO_2$. Amine-based regenerative chemical absorption processes using aqueous solutions of amines, mostly monoethanolamine (MEA), have been widely practiced for several years for $CO_2$ capture from gas streams in natural gas and refinery off gases. Although absorption by amine solutions is the one of the most mature $CO_2$ capture technology in commercial applications, it requires an intense high energy process. For example, MEA adsorption capacity for $CO_2$ is 720 g/kg and the energy requirement for $CO_2$ capture when using a 30% MEA solution varies from 3200 to 5500 kJ/kg $CO_2$. In addition, to strip off adsorbed $CO_2$ (desorption) from MEA, the solution is usually heated to about 110-140° C, which leads to the loss of some portion of the MEA. The heat management for MEA solvent regeneration alone can constitute up to 70% of the total operating costs in a $CO_2$ capture plant. Hence, development of efficient sorbents with high adsorption capacity and low energy requirements are of vital importance for $CO_2$ capture and storage applications.

Plants also capture ambient $CO_2$, and planting trees, crops, and grasses have been used for years to offset $CO_2$ emissions from industrial processes. Ensuring the robust growth of those plants is key to enabling the planting of those plants to actually capture $CO_2$. Fertilizer application can help plants grow to their potential.

However, application of a fertilizer does not always provide the full amount of the nutrients in the fertilizer to the plant within a short period of time. Some fertilizers contain nutrient containing compounds that are not readily available to the plant upon application. In these circumstances, some apply fertilizer well before the planting of plants, or some over fertilize closer to the planting of the plants to provide sufficient nutrients to the plant initially. This comes at the cost of time, may require multiple treatments to the soil before or after planting, and/or may increase expenses.

In addition, plants, such as crop plants, need nutrients at least over the entire growth and maturation period for the plant. Many fertilizers, when applied to a soil, disperse, are degraded, or are taken up within a short period of time after application and do not supply nutrients over the growth and maturation period. To address this issue, fertilizers can be applied multiple times to the same plants or slow release fertilizers can be used. Some approaches to slow release fertilizers include polymer coating a fertilizer core. However, many polymer coatings are expensive and/or will undesirably build up in the soil over time after repeated applications. Some approaches to slow the release of fertilizers include coating or mixing with insoluble metal oxides, such as MgO and CaO. However, these metal oxides do not provide much, if any, nutrients to the plant.

Continuous use of fertilizers leads to loss of soil fertility and nutrient balance. To increase the crop yield and satisfy the growing need of increasing population, more fertilizers are being used. In addition, large application or usage of urea and urea's rapid hydrolysis and nitrification in the soil is causing deterioration of soil health and environmental issues such as greenhouse emissions and ground water contamination.

**SUMMARY OF THE INVENTION**

A solution to at least some of the problems discussed above is disclosed herein, including use of a composition combining ammonium sulfate and an acid modified and activated carbon black in capture of $CO_2$ and optionally using the composition as a fertilizer at the end of its useful life of $CO_2$ capture, or before. The acid modified and activated carbon black may comprise carbon black produced from a hydrogen production processes, a hydrocarbon pyrolysis process other than a hydrogen production process, and/or a hydrocarbon and/or waste polymer cracking process. It has been found that $CO_2$ adsorption capacity of activated carbon black grafted with the nitrogen containing functional groups can be 19.07 mmol/g, which is equivalent to 832 g/kg, well above the capacity for MEA. Further, it has been found that the temperature needed for $CO_2$ desorption for a combination of ammonium sulfate and activated carbon black is less 110° C, which is less than that needed for MEA.

In some aspects, the acid modified and activated carbon black is acid modified by sulfuric acid, nitric acid, and/or phosphoric acid. In one aspect, the acid modified and activated carbon black is acid modified by sulfuric acid ($H_2SO_4$). In another aspect, the acid modified and activated carbon black is acid modified by nitric acid ($HNO_3$). In another aspect, the acid modified and activated carbon black is acid modified by phosphoric acid ($H_3PO_4$). In some aspects, the ammonium sulfate (($NH_4)_2SO_4$) at least partially binds and/or at least partially surrounds the acid modified and activated carbon black. In some aspects, the ammonium sulfate forms a continuous phase in the composition. In some aspects, at least a portion of the ammonium sulfate (($NH_4)_2SO_4$) is absorbed on the surface of the acid modified and activated carbon black. In some aspects, the ammonium sulfate is distributed uniformly within pores of the acid modified and activated carbon black. In some aspects, the ammonium sulfate is distributed within the pores of the acid modified and activated carbon black and the ammonium sulfate forms pores having a pore volume of 100-300 $cm^3$/g, or any range or number therein. In some aspects, the composition comprises at least a sufficient amount of ammonium sulfate to provide 6 to 20 wt. % of nitrogen based on the total weight of the composition or any range or number therein.

In some aspects, the acid modified and activated carbon black comprises methane pyrolysis produced carbon black. In some aspects, the acid modified and activated carbon black comprises carbon black that is produced through a hydrogen production processes. In some aspects, the acid modified and activated carbon black comprises carbon black that is produced through a cracking processes of a high molecular weight hydrocarbon. In some aspects, the acid modified and activated carbon black comprises carbon black that is produced through a cracking processes of a waste polymer. In some aspects, the acid modified and activated carbon black comprises carbon black that is produced from a biomass. In some aspects, the carbon black may be derived from a natural gas and/or a shale gas.

In some aspects, the composition comprises 10 to 50 wt. % of the acid modified and activated carbon black based on the total weight of the composition or any range or number therein. In some aspects, the acid modified and activated carbon black comprises carbon black having a median particle diameter of 10 to 500 nanometers, or any range or number therein.

In some aspects, the composition further comprises 5 to 10 wt. % of potassium sulfate based on the total weight of the composition, or any range or number therein. In some aspects, the composition further comprises 5 to 10 wt. % of microelements based on the total weight of the composition, or any range or number therein. In some aspects, the microelements comprise Mn, Zn, and/or Mg.

In some aspects, the composition further comprises one or more live microorganisms. In some aspects, microorganisms comprise diazotrophic bacteria, Azospirillum species, Azotobacter species, *Frateuria aurantia,* Bacillus species, endophytes, nitrogen fixing microorganism, methylotrophs, comammox microorganism, phosphorus solubilizing microorganism, Nitrospira species, Methylobacterium species, pink pigmented facultative methylotrophs (PPFM-trophs), *Pseudomonas plecoglossicida,* and/or *Bacillus aryabhattai.* In some aspects, at least a portion of the live microorganisms in the composition may be comprised in a coating of the composition, and/or in a coating of the acid modified and activated carbon black, and/or in a coating of the ammonium sulfate, and/or in a pore of any of these.

In some aspects, the composition is a sorbent for $CO_2$ adsorption. In some aspects, the composition further comprises $CO_2$. In some instances, the $CO_2$ is captured on and/or in the composition, such as in a pore and/or on the surface of the composition.

In some aspects, the composition is a powder. In some aspects, the composition is a pellet. In some aspects, the composition is a granule. In some aspects, the composition is capable of being, or is, blended with other fertilizers. In some aspects, the composition is in contact with a soil, a crop, or a soil and a crop as a fertilizer. In some aspects, the composition is capable of being used in fertigation. In some aspects, the composition is in contact with $CO_2$ containing industrial gas stream.

Certain aspects are directed to a method of capturing $CO_2$ using the compositions described herein. In some aspects, the method comprises contacting $CO_2$ with any of the compositions disclosed herein. In some instances, the $CO_2$ is adsorbed on the composition. In some aspects, the method further comprises desorption of the $CO_2$. Both adsorption, and/or desorption steps may occur at approximately 20° C to 110° C, such as 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 119, and 120° C. In some aspects, adsorption may occur at 10 to 50° C or 10, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50° C or any temperature or range therein. In some aspects, desorption may occur at 50 to 110° C or 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, and 115° C or any temperature or range therein. In some aspects, the compositions which were used as a $CO_2$ adsorbent may have been used for at least one or more $CO_2$ adsorption-desorption cycles. In some aspects, the spent compositions (upon completion of at least one or more of $CO_2$ adsorption-desorption cycles) may be use as a fertilizer. In some aspects, the spent composition further comprises one or more live microorganisms.

Certain aspects are directed to a method of fertilizing, the method comprising applying any one of compositions described herein to a soil, a crop, water, or any combination thereof. In some instances, the composition is a spent composition. In some instances, the composition is combined with other fertilizers. In some instances, the composition comprises captured $CO_2$. In some instances, the composition further comprises a micronutrient and/or a microorganism.

Also disclosed are the following aspects 1 to 20 of the present invention.

Aspect 1 is a composition comprising acid modified and activated carbon black embedded with ammonium sulfate wherein the acid modified and activated carbon black comprises carbon black produced from:

a hydrogen production processes;
a hydrocarbon pyrolysis other than a hydrogen production process; and/or
a hydrocarbon and/or waste polymer cracking process.

Aspect 2 is the composition of aspect 1, comprising a sufficient amount of ammonium sulfate to provide 6 to 20 wt. % of nitrogen.

Aspect 3 is the composition of any one of aspects 1 to 2, wherein the acid modified and activated carbon black is acid modified by sulfuric acid, nitric acid, and/or phosphoric acid.

Aspect 4 is the composition of any one of aspects 1 to 3, wherein the ammonium sulfate is distributed uniformly within pores of the acid modified and activated carbon.

Aspect 5 is the composition of aspect 4, wherein the ammonium sulfate distributed within the pores of the acid modified and activated carbon forms pores having a pore volume of 100-300 cm$^3$/g.

Aspect 6 is the composition of any one of aspects 1 to 5, wherein the acid modified and activated carbon black comprises methane pyrolysis produced carbon black.

Aspect 7 is the composition of any one of aspects 1 to 6, comprising 10 to 50 wt. % of the acid modified and activated carbon black based on the total weight of the composition.

Aspect 8 is the composition of any one of aspects 1 to 7, further comprising 5 to 10 wt. % of potassium sulfate based on the total weight of the composition.

Aspect 9 is the composition of any one of aspects 1 to 8, further comprising 5 to 10 wt. % of microelements based on the total weight of the composition.

Aspect 10 is the composition of aspect 9, wherein the microelements comprise Mn, Zn, and/or Mg.

Aspect 11 is the composition of any one of aspects 1 to 10, wherein the acid modified and activated carbon black comprises carbon black having a median particle diameter of 10 to 500 nanometers.

Aspect 12 is the composition of any one of aspects 1 to 11, comprising a sufficient amount of ammonium sulfate to provide 15 to 20 wt. % of nitrogen.

Aspect 13 is the composition of any one of aspects 1 to 12, further comprising live microorganisms.

Aspect 14 is the composition of any one of aspects 1 to 13, wherein the composition is in a form of powder, pellets, and/or granules.

Aspect 15 is the composition of any one of aspects 1 to 14, wherein the composition is in contact with a soil, a crop, or a soil and a crop as a fertilizer.

Aspect 16 is the composition of any one of aspects 1 to 15, wherein the composition is a sorbent for $CO_2$ adsorption and the composition further comprises $CO_2$, wherein the $CO_2$ is captured on and/or in the acid modified and activated carbon black embedded with ammonium sulfate.

Aspect 17 is a method of producing the composition of any one of aspects 1 to 16, the method comprising impregnating acid modified and activated carbon black with ammonium sulfate to produce a product comprising 6 to 20 wt. % of nitrogen.

Aspect 18 is a method of capturing $CO_2$, the method comprising contacting $CO_2$ with a composition of any one of aspects 1 to 16, wherein the $CO_2$ is adsorbed on the composition.

Aspect 19 is the method of aspect 18, wherein the method further comprises desorption of the $CO_2$.

Aspect 20 is a method of fertilizing, the method comprising applying the composition of any one of aspects 1 to 16 to a soil, a crop, or a soil and a crop.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. Compositions and methods "consisting essentially of" any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIGURE: a non-limiting schematic representation of a method of making and using a composition disclosed herein.

**DETAILED DESCRIPTION OF THE INVENTION**

Certain aspects of the present disclosure provide benefits over existing $CO_2$ adsorbent materials. Compositions including ammonium sulfate $((NH_4)_2SO_4)$ impregnated acid modified and activated carbon black. The composition may act as a sorbent for $CO_2$ adsorption. In certain aspects, these compositions may be used to adsorb $CO_2$ from a $CO_2$ containing mixed gas stream. In addition, these compositions are capable of releasing the adsorbed carbon dioxide when heated to regenerate the $CO_2$ absorbing capacity of the composition. In some aspects, these compositions can be used as fertilizer once, or before, the $CO_2$ absorbing capacity of the composition decreases to a certain threshold. Certain aspects provided herein allow for the fertilizer to slowly release nutrients into the soil over a period of time, such as throughout a growing cycle for a plant. In some embodiments, the fertilizer composition comprises an ammonium sulfate $((NH_4)_2SO_4)$, acid modified and activated carbon black, potassium sulfate $(K_2SO_4)$, carbon dioxide, and/or live microorganisms, which may be one composition and/or one homogenous mixture. The ammonium sulfate may act as a binder for the other components in the fertilizer. In some embodiments, the fertilizer my include a spent composition comprising ammonium sulfate $((NH_4)_2SO_4)$ and acid modified and activated carbon black used in $CO_2$ adsorption-desorption cycles.

**I. Compositions for $CO_2$ Adsorption**

Certain embodiments are directed to $CO_2$ adsorption and/or capture. In some aspects, the composition comprises an acid modified and activated carbon black embedded with ammonium sulfate. In some aspects, the acid modified and activated carbon black comprises carbon black produced from a hydrogen production processes. In some aspects, the acid modified and activated carbon black comprises carbon black produced from a hydrocarbon pyrolysis process other than a hydrogen production process. In some aspects, the acid modified and activated carbon black comprises carbon black produced from a hydrocarbon cracking process. In some aspects, the acid modified and activated carbon black comprises carbon black produced from a waste polymer cracking process. In some aspects, the acid modified and activated carbon black comprises methane pyrolysis produced carbon black. In some aspects, the acid modified and activated carbon black comprises carbon black produced from a chemical reaction such as decomposition of methane to carbon black and hydrogen as depicted in equation (1).

$$CH_4 \rightarrow C + 2H_2 \qquad (1)$$

In some aspects, the acid modified and activated carbon black comprises carbon black that is produced from biomass. In some aspects, the acid modified and activated carbon black comprises carbon black derived from a natural gas and/or a shale gas.

In some aspects, the acid modified and activated carbon black is acid modified by sulfuric acid, nitric acid, and/or phosphoric acid. In one aspect, the acid modified and activated carbon black is acid modified by sulfuric acid ($H_2SO_4$). In another aspect, the acid modified and activated carbon black is acid modified by nitric acid ($HNO_3$). In another aspect, the acid modified and activated carbon black is acid modified by phosphoric acid ($H_3PO_4$).

In some aspects, the ammonium sulfate (($NH_4)_2SO_4$) at least partially binds and/or at least partially surrounds the acid modified and activated carbon black. In some aspects, the ammonium sulfate forms a continuous phase in the composition. In some aspects, at least a portion of the ammonium sulfate (($NH_4)_2SO_4$) is absorbed on the surface of the acid modified and activated carbon black. In some aspects, the ammonium sulfate is distributed uniformly within pores of the acid modified and activated carbon black. In some aspects, the composition comprises at least a sufficient amount of ammonium sulfate to provide 6 to 20 wt. % of nitrogen. In some aspects, the sufficient amount of ammonium sulfate in the composition may be an amount that provides at least any one of, at most any one of, equal to any one of, or between any two of 5, 6, 7, 8, 9, 10, 11, 12, 13, 14, 15, 16, 17, 18, 19, 20, 21, 22, 23, 24, or 25 wt. % of nitrogen.

In some aspects, the composition forms pores having a pore volume of 100-300 cm$^3$/g, or at least any one of, at most any one of, equal to any one of, or between any two of pore volume of 80, 90, 100, 110, 120, 130, 140, 150, 160, 170, 180, 190, 200, 210, 220, 230, 240, 250, 260, 270, 280, 290, 300, 310, 320, 330, 340, or 350 cm$^3$/g.

In some aspects, the composition comprises 10 to 50 wt. % of the acid modified and activated carbon black, or at least any one of, at most any one of, equal to any one of, or between any two of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 wt. % of the acid modified and activated carbon black based on the total weight of the composition, or any range or number therein. In some aspects, the acid modified and activated carbon black comprises carbon black having a median particle diameter of 10 to 500 nanometers, or at least any one of, at most any one of, equal to any one of, or between any two of median particle diameter of 5, 6, 7, 8, 9, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, or 550 nanometers, or any range or number therein.

In some aspects, the composition further comprises 5 to 10 wt. % of potassium sulfate, or at least any one of, at most any one of, equal to any one of, or between any two of 5, 6, 7, 8, 9, 10, 11, 12, 13, 14, or 15 wt. % of potassium sulfate based on the total weight of the composition, or any range or number therein.

In some aspects, the composition further comprising 5 to 10 wt. % of microelements, or at least any one of, at most any one of, equal to any one of, or between any two of 5, 6, 7, 8, 9, 10, 11, 12, 13, 14, or 15 wt. % of microelements based on the total weight of the composition, or any range or number therein. In some aspects, the microelements comprise Mn, Zn, and/or Mg.

In some aspects, the composition is a powder. In some aspects, the composition is a pellet. In some aspects, the composition has a pellet size of 1-10 mm in diameter, or at least any one of, at most any one of, equal to any one of, or between any two of 1, 2, 3, 4, 5,6, 7, 8, 9, or 10 mm, or any range or number therein.

## II. Fertilizer Compositions

Certain embodiments described herein have the potential to increase crop production and to provide a sustained-release fertilizer. In some aspects, a fertilizer comprises: a nitrogen and sulfur compound such as an ammonium sulfate (($NH_4)_2SO_4$); a porous material such as acid modified and activated carbon black produced from a hydrogen production processes, a hydrocarbon pyrolysis process other than a hydrogen production process, and/or a hydrocarbon and/or waste polymer cracking process; optionally a potassium compound such as potassium sulfate ($K_2SO_4$); and/or optionally a live microorganism. In some aspects, the fertilizer comprises spent compositions for $CO_2$ adsorption-desorption cycles described herein. In some aspects, the fertilizer further comprises microelements, such as Mn, Zn, and/or Mg. In some aspects, the fertilizer further comprises live microorganisms. In some aspects, the fertilizer is a mixture that is a homogeneous mixture. In some aspects, the fertilizer is a multiphase complex. In some aspects, the fertilizer comprises amorphous phases made of components of the fertilizer. In certain aspects, the fertilizer further comprises a binder.

The fertilizer, which may be a fertilizer granule, can contain a mixture containing sulfur (S) present as a sulfate, nitrogen (N) present as an ammonium and/or ammonium sulfate compound, carbon (C) present as carbon black. The ratio of elements present in the fertilizer may be tailored to specific applications.

At least a portion of N and S can be present as ammonium sulfate. In some aspects, at least 15 wt. %, or at least 20 wt. %, or at least 25 wt. %, or at least 30 wt. %, or at least 35 wt. %, or at least 40 wt. %, or at least 45 wt. %, or at least 50 wt. %, or at least 55 wt. %, or at least 60 wt. %, or at least 65 wt. %, or at least 70 wt. %, or at least 75 wt. %, or at least 80 wt. %, or at least 85 wt. %, or at least 90 wt. %, or at least 95 wt. %, or at least 100 wt. %, or 25 wt. % to 100 wt. %, based on the total weight of N and S in the mixture. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the N and S in the mixture can be present as ammonium sulfate. In some aspects, the sufficient amount of ammonium sulfate in the composition may be an amount that provides at least any one of, at most any one of, equal to any one of, or between any two of 10, 11, 12, 13, 14, 15, 16, 17, 18, 19, 20, 21, 22, 23, 24, or 25 wt. % of nitrogen.

In some aspects, the composition comprises 10 to 50 wt. % of the acid modified and activated carbon black, or at least any one of, at most any one of, equal to any one of, or between any two of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 wt. % of the acid modified and activated carbon black based on the total weight of the composition, or any range or number therein. In some aspects, the acid modified and activated carbon black comprises carbon black having a median particle diameter of 0 to 100 nanometers, or at least any one of, at most any one of, equal to any one of, or between any two of median particle diameter of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 nanometers.

In some aspects, the fertilizer can contain i) potassium sulfate ($K_2SO_4$) in an amount providing at least any one of, at most any one of, equal to any one of, or between any two of 1, 2, 3, 4, 5, 6, 7, 8, 9, 10, 11, 12, 13, 14, and 15 wt. % based on the total weight of the mixture and/or the fertilizer granule; ii) micronutrients in an amount providing at least any one of, at most any one of, equal to any one of, or between any two of 1, 2, 3, 4, 5, 6, 7, 8, 9, 10, 11, 12, 13, 14, and 15 wt. % based on the total weight of the mixture and/or the fertilizer granule; and iii) live microorganisms in an amount providing at least any one of, at most any one of, equal to any one of, or between any two of 0.001, 0.01, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 3, 4, or 5 wt. %, or any range thereof, based on the weight of the fertilizer granule.

In some aspects, the mixture comprises C, N, K, and/or S wherein i) the C content of the mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the N content of the mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the K content of the mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iv) the S content of the mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. based on the total weight of the mixture and/or fertilizer.

The C, N, K, and/or S can be present as and/or sourced as a water soluble compound or a water insoluble compound. In some instances, the C, N, K, and/or S can be present as a salt. In some aspects, the C, N, K, and/or S can be present as a water soluble salt. In some instances, the water soluble N and S can be $(NH_4)_2SO_4$. In some instances, the water soluble K and S can be $K_2SO_4$. The C, N, K, and/or S salt can be in a non-hydrate and/or one or more hydrate form.

Moisture content of the dried composition can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the composition. As a non-limiting example, the moisture content can be measured by drying the sample at 50° C for 25 min and measuring the amount of mass lost by the fertilizer after being dried.

The fertilizer can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the granule to water at a pH 7, under stirring at a rate 90 rpm to 110 rpm, at an ambient temperature. In some instances, a fertilizer granule having a size of 2 mm to 4 mm prior to adding to water, does not disintegrate into only particles having sizes less than 1 mm, less than 0.9 mm, less than 0.8 mm, less than 0.7 mm, less than 0.6 mm, less than 0.5 mm, less than 0.4 mm, or less than 0.3 mm, before 10 minutes, 15 minutes, 20 minutes, 25 minutes, 30 minutes, 35 minutes, 40 minutes, 45 minutes, 50 minutes, 55 minutes, 60 minutes, 2 hours, 3 hours, 4 hours, 5 hours, 6 hours, 7 hours, 8 hours, 9 hours, 10 hours, or greater than 10 hours of adding the granule to water at a pH 7, under stirring at a rate 90 rpm to 110 rpm, at an ambient temperature.

The mixture can have a compositional make-up that is substantially homogeneous. In some instances, a compositional make-up for a 1 mm $\times$ 1 mm $\times$ 1 mm cube at any position of the mixture can be similar (within $\pm$ 20 %, or $\pm$ 10 %, or $\pm$ 5 %, or $\pm$ 3 %, $\pm$ 2 %, or $\pm$ 1 %, or $\pm$ 0.5 %) to that of a 1 mm $\times$ 1 mm $\times$ 1 mm cube at any other position of the mixture.

In some aspects, the fertilizer granule can contain an homogeneous mixture. The homogeneous mixture can have compositions as described above. In some instances, the homogenous mixture can have an optional coating on the outer surface of the homogenous mixture. In some instances, the $(NH_4)_2SO4$ forms an amorphous phase, a continuous phase, and/or encapsulates other ingredients in the fertilizer. In some instances, the fertilizer comprises a matrix of $(NH_4)_2SO4$ that it at least partially binds and/or encapsulates and/or surrounds at least a portion of the acid modified and activated carbon black and/or potassium sulfate. In some instances, the fertilizer comprises acid modified and activated carbon black that at least partially binds and/or encapsulates and/or surrounds at least a portion of the $(NH_4)_2SO4$ and/or potassium sulfate. In some instances, the fertilizer comprises particles of the $(NH_4)_2SO_4$, potassium sulfate, and/or of acid modified and activated carbon black. In some aspects, the fertilizer is a multiphase complex. In some aspects, the fertilizer comprises amorphous phases made of components of the fertilizer.

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, additional phosphorus nutrients, additional potassium nutrients, additional micronutrients, additional secondary nutrients, inhibitors, pH buffers, etc. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in the optional coating of the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some instances, the urease inhibitor may include, but are not limited to, triamide, such as N-(n-butyl) thiophosphoric triamide (NBTPT) and N-(n-propyl) thiophosphoric triamide. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer described herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A composition formed into a granule can have desirable physical properties such as desired levels of abrasion resistance, granule strength, pelletizability, hygroscopicity, granule shape, and size distribution. In some aspects, The granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the granule can dissolve in 1 ml of water at a pH 7, under stirring at a rate 90 to 110 rpm, and at an ambient temperature, within 5 minutes of adding 100 mg of the granules to the water or only after 10 minutes, 20 minutes, 30 minutes, 40 minutes, 50 minutes, 60 minutes, 2 hours, 4 hours, 6 hours, 8 hours, 10 hours, 15 hours, or 24 hours of adding 100 mg of the granules to the water. In some aspects, the granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{\textit{weight of sample remained on 2 mm sieve } ((W2))}{\textit{intial weight of the sample } (W1)} \times 100$$

**III.** Method of Making the Composition

A method of producing a composition described herein may comprise impregnating acid modified and activated carbon black with ammonium sulfate to produce a product comprising 6 to 20 wt. % of nitrogen.

In some instances, the feed mixture ingredients to produce the composition can include i) an acid modified and activated carbon black source, e.g., carbon black from methane pyrolysis and/or carbon black from a refinery process, ii) a N source, e.g., ammonium sulfate, nitric acid, and/or ammonia, iii) a S source, e.g., ammonium sulfate, potassium sulfate, and/or sulfuric acid. In some instances, a mixture ingredient provides more than one of carbon black, N, and/or S sources. In some instances, a mixture ingredient further provides a K source, e.g., potassium sulfate. In some instances, a mixture ingredient further provides micronutrients, such as Mn, Zn, and/or Mg. In some instances, a mixture ingredient further provides a live microorganisms. In certain aspects, one or more ingredients can be added as a water solution. In some instances, the mixture ingredients are provided as a powder. In some instances, one or more ingredients can be added as a liquid. In some instances, one or more ingredients can be added as a gas. In some instances, a portion of the mixture of ingredients is provided as a powder.

In some aspects, the ammonium sulfate $((NH_4)_2SO_4)$ and acid modified and activated carbon black are contacted at a temperature of at least, at most, equal to, or between any two of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, or 150° C, such as between 20 and 80° C or between 100 and 150° C or between 75 and 150° C or between 55 to 75° C or between 20 and 150° C.

In certain aspects, the desired size of a final composition product, such as a pellet and/or a granule, can have a diameter of 0.5 to 5 mm, or 1 to 4 mm, have a size lower than 0.5 mm or 1 mm, and/or have a size bigger than 4 mm or 5 mm.

FIGURE shows a method of making an activated carbon black and ammonium sulfate composition (104), and using the same composition for CO2 capture (109) as well as a fertilizer (111) according to an example of the present invention. Referring to FIGURE an acid modified activated carbon black (103) is prepared from a carbon black, which is produced in a pyrolysis reactor (102) through methane (101) decomposition and $H_2$ gas (105) release. An ammonium sulfate solution (106) can be contacted with the produced acid modified activated carbon black (103) to generate a sorbent composition comprising an activated carbon black and ammonium sulfate (104). In one aspect of the invention, $CO_2$ comprising gaseous mixture (107) purged through the sorbent composition (104), may form a sorbent composition with captured $CO_2$ (109) and separate out other gases (108), such as nitrogen. In another aspect of the invention, upon heating, the sorbent composition with captured $CO_2$ (109) may releases $CO_2$ (110), and regenerate the sorbent composition (104). In another aspect of the invention, the regenerated composition (104) may be use as a fertilizer (111) by combining with other ingredients (112), such as potassium sulfate, microelements, and/or microorganisms.

## IV. Methods of Using the Composition

The composition, including the ammonium sulfate $((NH_4)_2SO_4)$ and acid modified and activated carbon black pellets can be used for $CO_2$ capture. A method of capturing $CO_2$ can comprise contacting $CO_2$ with any of the compositions described herein to produce a $CO_2$ adsorbed composition. In some instances, the $CO_2$ is adsorbed on the composition. In some aspects, the method further comprises desorption of the $CO_2$. Both adsorption, and/or desorption steps may occur at approximately 20° C to 110° C, such as 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 119, and 120° C. In some aspects, adsorption may occur at 10 to 50° C or 10, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50° C or any temperature or range therein. In some aspects, desorption may occur at 50 to 110° C or 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, and 115° C or any temperature or range therein. In some aspects, the compositions which were used as a $CO_2$ adsorbent may have been used for at least one or more $CO_2$ adsorption-desorption cycles.

The composition, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil, a crop, and/or water an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

## EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

## Example 1

## Preparation of a composition

To acid treat and activate carbon black, 7 g of the carbon black was gradually added to 100 ml of 3% wt. sulfuric acid. The impregnated carbon black was then dried in an oven at 80° C. To the acid treated carbon black, 100 ml of an ammonium sulfate solution containing 3 wt.% $(NH_4)_2SO4$ was added and impregnated at 39° C. The resulting mixture was stirred for 2 hours and then left at room temperature for 2 days. The formed composition was pushed through a thin funnel to get pellets with size 1-2 mm. Then the pellets were dried at 45° C for 8 hours.

**Example 2**

To acid treat and activate carbon black, 7 g of the carbon black was gradually added to 100 ml of 3% wt. sulfuric acid. The impregnated carbon black was then dried in an oven at 80° C. To the acid treated carbon black, 100 ml of an ammonium sulfate solution containing 7 wt.% $(NH_4)_2SO4$ was added and impregnated at 39° C. The resulting mixture was stirred for 2 hours and then left at room temperature for 2 days. The formed composition was pushed through a thin funnel to get pellets with size 1-2 mm. The pellets were then dried at 45° C for 8 hours.

**Example 3**

To acid treat and activate carbon black, 6 g of the carbon black was gradually added to 100 ml of 3% wt. sulfuric acid. The impregnated carbon black was then dried in an oven at 80° C. To the acid treated carbon black, 100 ml of an ammonium sulfate solution containing 3 wt.% $(NH_4)_2SO_4$ and 1 wt.% potassium sulfate($K_2SO_4$) was added and impregnated at 39° C. The resulting mixture was stirred for 2 hours and then left at room temperature for 2 days. The formed composition was pushed through a thin funnel to get pellets with size 1-2 mm. The pellets were then dried at 45° C for 8 hours.

**Example 4**

To acid treat and activate carbon black, 6 g of the carbon black was gradually added to 100 ml of 3% wt. sulfuric acid. The impregnated carbon black was then dried in an oven at 80° C. To the acid treated carbon black, 100 ml of an ammonium sulfate solution containing 6 wt.% $(NH_4)_2SO_4$ and 2 wt.% potassium sulfate($K_2SO_4$) was added and impregnated at 39° C. The resulting mixture was stirred for 2 hours and then left at room temperature for 2 days. The formed composition was pushed through a thin funnel to get pellets with size 1-2 mm. The pellets were then dried at 45° C for 8 hours.

**Example 5**

To acid treat and activate carbon black, 7 g of the carbon black was gradually added to 100 ml of 3% wt. phosphoric acid. The impregnated carbon black was then dried in an oven at 80 °C. To the acid treated carbon black, 100 ml of an ammonium sulfate solution containing 3 wt.% $(NH_4)_2SO_4$ was added and impregnated at 39° C temperature. The resulting mixture was stirred for 2 hours and then left at room temperature for 2 days. The formed composition was pushed through a thin funnel to get pellets with size 1-2 mm. The pellets were then dried at 45° C for 8 hours.

**Example 6**

**$CO_2$ adsorption**

The ammonium sulfate $(NH_4)_2SO_4)$ impregnated carbon black composition samples can be tested for $CO_2$ adsorption at different temperature ranges from 25° C to 35° C and pressures up to 30 bar. The $CO_2$ adsorption capacity of these compositions may be in the range of 10 to 25 mmol/g at 25° C and 30 bar. The energy consumption requirement for these compositions are in the range of 1000-2000 kJ/kg $CO_2$, which is significantly lower than of MEA. $CO_2$ adsorption on porous $(NH_4)_2SO4$ impregnated carbon black may depend in part on the pore volume and particle size of the carbon black. Pore volume and particle size of impregnated carbon black may be optimize by varying the wt.% of $(NH_4)_2SO4$ in the composition. The effect of temperature on the $CO_2$ adsorption capacity of these compositions can be evaluated by recording the $CO_2$ adsorption isotherms at various temperatures and 30 bar pressure. Anticipated temperature needed to strip $CO_2$ (desorption) in these compositions are less than 110° C, (where as MEA usually needs to be heated about 110-140° C to strip $CO_2$).

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

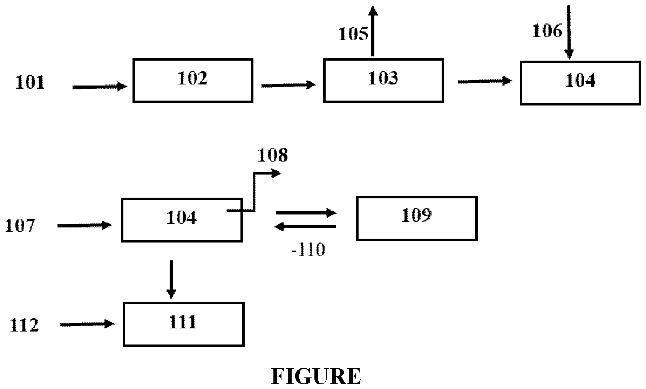

**Claims**

1. A composition comprising acid modified and activated carbon black embedded with ammonium sulfate wherein the acid modified and activated carbon black comprises carbon black produced from:

   a hydrogen production processes;
   a hydrocarbon pyrolysis other than a hydrogen production process; and/or
   a hydrocarbon and/or waste polymer cracking process.

2. The composition of claim 1, comprising a sufficient amount of ammonium sulfate to provide 6 to 20 wt. % of nitrogen.

3. The composition of any one of claims 1 to 2, wherein the acid modified and activated carbon black is acid modified by sulfuric acid, nitric acid, and/or phosphoric acid.

4. The composition of any one of claims 1 to 3, wherein the ammonium sulfate is distributed uniformly within pores of the acid modified and activated carbon, preferably wherein the acid modified and activated carbon black comprises carbon black having a median particle diameter of 10 to 500 nanometers.

5. The composition of claim 4, wherein the ammonium sulfate distributed within the pores of the acid modified and activated carbon forms pores having a pore volume of 100-300 $cm^3/g$.

6. The composition of any one of claims 1 to 5, wherein the acid modified and activated carbon black comprises methane pyrolysis produced carbon black.

7. The composition of any one of claims 1 to 6:

   comprising 10 to 50 wt. % of the acid modified and activated carbon black based on the total weight of the composition;
   further comprising 5 to 10 wt. % of potassium sulfate based on the total weight of the composition; and/or
   further comprising 5 to 10 wt. % of microelements based on the total weight of the composition, preferably wherein the microelements comprise Mn, Zn, and/or Mg.

8. The composition of any one of claims 1 to 7, comprising a sufficient amount of ammonium sulfate to provide 15 to 20 wt. % of nitrogen.

9. The composition of any one of claims 1 to 8, further comprising live microorganisms.

10. The composition of any one of claims 1 to 9, wherein the composition is in a form of powder, pellets, and/or granules.

11. The composition of any one of claims 1 to 10, wherein the composition is in contact with a soil, a crop, or a soil and a crop as a fertilizer.

12. The composition of any one of claims 1 to 11, wherein the composition is a sorbent for $CO_2$ adsorption and the composition further comprises $CO_2$, wherein the $CO_2$ is captured on and/or in the acid modified and activated carbon black embedded with ammonium sulfate.

13. A method of producing the composition of any one of claims 1 to 12, the method comprising impregnating acid modified and activated carbon black with ammonium sulfate to produce a product comprising 6 to 20 wt. % of nitrogen.

14. A method of capturing $CO_2$, the method comprising:

   contacting $CO_2$ with a composition of any one of claims 1 to 12, wherein the $CO_2$ is adsorbed on the composition; and
   desorption of the $CO_2$.

15. A method of fertilizing, the method comprising applying the composition of any one of claims 1 to 12 to a soil, a crop, or a soil and a crop.

**FIGURE**

Europäisches
Patentamt

European
Patent Office

Office européen
des brevets

# EUROPEAN SEARCH REPORT

**Application Number**

EP 23 21 7191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAYATRI YADAVALLI: "Carbon dioxide capture using ammonium sulfate surface modified activated biomass carbon", BIOMASS AND BIOENERGY, vol. 98, 1 March 2017 (2017-03-01), pages 53-60, XP093166549, AMSTERDAM, NL ISSN: 0961-9534, DOI: 10.1016/j.biombioe.2017.01.015 | 1-6,8, 10-15 | INV. B01J20/20 |
| Y | * In the abstract; points 2.2 to 2.5 of pages 54, 55; figures 1, 2 of page 55. * | 7,9 | |
| X | US 2016/296908 A1 (LI MOWEN [US] ET AL) 13 October 2016 (2016-10-13) | 1-6,8, 10-13 | |
| Y | * example 9 * | 7,9 | |
| Y | US 2010/209988 A1 (HUTCHINGS TONY RICHARD [GB] ET AL) 19 August 2010 (2010-08-19) * paragraph [0012]; examples 1,2 * | 7,9 | |
| X | WO 2016/187161 A1 (COOL PLANET ENERGY SYSTEMS INC [US]) 24 November 2016 (2016-11-24) * paragraph [0208] - paragraph [0211] * | 1,15 | TECHNICAL FIELDS SEARCHED (IPC) B01J B01D |
| A | MOHD AZMI NURADILA ZAHIRAH ET AL: "Recent advances in biomass based activated carbon for carbon dioxide capture - A review", JOURNAL OF INDUSTRIAL AND ENGINEERING CHEMISTRY, THE KOREAN SOCIETY OF INDUSTRIAL AND ENGINEERING CHEMISTRY, KOREA, vol. 116, 20 August 2022 (2022-08-20), pages 1-20, XP087217631, ISSN: 1226-086X, DOI: 10.1016/J.JIEC.2022.08.021 [retrieved on 2022-08-20] * the whole document * | 1-15 | |

The present search report has been drawn up for all claims

| Place of search | Date of completion of the search | Examiner |
|---|---|---|
| The Hague | 28 May 2024 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                        EP 23 21 7191

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | | Publication date |
|---|---|---|---|---|
| US 2016296908    A1 | 13-10-2016 | CA | 2926826 A1 | 07-10-2016 |
| | | US | 2016296908 A1 | 13-10-2016 |
| | | US | 2018029009 A1 | 01-02-2018 |
| | | US | 2022152578 A1 | 19-05-2022 |
| US 2010209988    A1 | 19-08-2010 | AU | 2006313588 A1 | 18-05-2007 |
| | | CA | 2628985 A1 | 18-05-2007 |
| | | DK | 1968898 T3 | 04-11-2013 |
| | | EP | 1968898 A1 | 17-09-2008 |
| | | GB | 2431926 A | 09-05-2007 |
| | | NZ | 568144 A | 22-12-2011 |
| | | US | 2010209988 A1 | 19-08-2010 |
| | | WO | 2007054691 A1 | 18-05-2007 |
| | | ZA | 200804347 B | 25-03-2009 |
| WO 2016187161    A1 | 24-11-2016 | AU | 2016265848 A1 | 30-11-2017 |
| | | AU | 2020250233 A1 | 05-11-2020 |
| | | AU | 2022202612 A1 | 12-05-2022 |
| | | CA | 2985680 A1 | 24-11-2016 |
| | | CN | 107614424 A | 19-01-2018 |
| | | EP | 3294671 A1 | 21-03-2018 |
| | | WO | 2016187161 A1 | 24-11-2016 |

EPO FORM P0459

For more details about this annex : see Official Journal of the European Patent Office, No. 12/82